# EUROPEAN PATENT SPECIFICATION

(11) **EP 2 764 935 B1**
(45) Date of publication and mention of the grant of the patent: **23.08.2017**
(21) Application number: 13194380.5
(22) Date of filing: 11.02.2013
(51) Int. Cl.: B22C 9/02, B22C 9/04, B22D 23/02, B29C 67/00, B22D 23/06

(54) **Method for manufacturing an element of a plurality of casting mold elements and casting method for manufacturing and system for casting a 3-dimensional object**
Verfahren zum Herstellen eines Elements mehrere Gussformelemente und Gussverfahren zum Herstellen und System zum Gießen eines dreidimensionalen Objekts
Procédé de fabrication d'un élément d'une pluralité d'éléments de moulage, procédé de moulage pour fabriquer et système permettant de couler un objet tridimensionnel

(43) Date of publication of application: 13.08.2014
(62) Divisional of application: 13154806.7
(73) Proprietor: King Abdulaziz City for Science & Technology (KACST), 11442 Riyadh (SA); Cambridge Enterprise Limited, The Old Schools, Cambridge, Cambridgeshire CB2 1TN (GB)
(72) Inventor: Baabbad, Mazen Abdullah, 11442 Riyadh (SA); Hutchings, Ian, Cambridge, Cambridgeshire CB2 1PZ (GB); Martin, Graham, Cambridge, Cambridgeshire CB2 1 PZ (GB); Castrejon-Pita, Alfonso, Cambridge, Cambridgeshire CB2 1PZ (GB)
(74) Representative: Goddar, Heinz J.

(56) References cited:
- WO-A1-00/07757
- WO-A1-2008/085134
- CH-A- 266 939
- DE-C- 868 494
- GB-A- 341 649
- US-A1- 2002 083 886
- E. BASSOLI, A. GATTO, L. IULIANO, M.G. VIOLENTE: "3D printing technique applied to rapid casting", RAPID PROTOTYPING JOURNAL, vol. 13, no. 3, 2007, pages 148-155, XP002695629,

## Description

The present invention relates to a method for manufacturing an element of a plurality of casting mould elements assemblable to a 3-dimensional object casting mould, a casting method for manufacturing a 3-dimensional object and a system for casting a 3-dimensional object.

One kind of manufacturing method is shaping. Shaping includes casting. There are different kinds of casting methods. For example, sand casting, also known as sand mold casting, is a metal casting method characterized by using sand as the mould material. In addition to the sand, a suitable bonding agent (usually clay) is mixed or occurs with the sand. The mixture is moistened, typically with water, but sometimes with other substances, to develop strength and plasticity of the clay and to make the aggregate suitable for molding. The sand is typically contained in a system of frames or mold boxes known as a flask. The mold cavities and gate systems are created by compacting the sand around models, or patterns, or carved directly into the sand.

Investment casting is another casting method. It is also called lost-wax casting. Lost foam casting is a modern form of investment casting that eliminates certain steps in the method. Casts can be made of the wax model itself, the direct method, or of a wax copy of a model that need not be of wax, the indirect method. The investment casting method is known for its capability to produce castings with relatively high dimensional precision, but so far, it takes longer time and is expensive in comparison to sand casting methods.

Additive/layered manufacturing or 3D printing is a process of making 3-dimensional solid objects from a digital model. 3D printing is achieved using additive processes, where an object is created by laying down successive layers of material. 3D printing is usually performed by a materials printer using digital technology. The use of additive manufacturing takes virtual designs from computer aided design (CAD) or animation modelling software, transforms them into thin, virtual, horizontal cross-sections and then creates successive layers until the model is complete. It is a WYSIWYG-process where the virtual model and the physical model are almost identical. To perform a print a machine reads in the design and lays down successive layers of liquid, powder, or sheet material, and in this way builds up the model from a series of cross sections. These layers, which correspond to the virtual cross section from the CAD model, are joined together or fused automatically to create the final shape. The primary advantage of additive manufacturing is its ability to create almost any shape or geometric feature.

Inkjet methods or inkjet printing are/is a sub-set of additive/layered manufacturing.

There is also a number of sand casting based additive/layered inkjet methods. The sand casting based additive/layered inkjet methods usually use the following steps:
1. dust a surface with a layer sand,
2. dispense binder (by inkjet printing head) to glue the selected areas of the dusted surface,
3. build a new layer at the top of the layer in above first step, and
4. remove the unbound sand (e.g. use compressed air to blow away loose sand),
wherein steps 2 and 3 are usually repeated before the final step (step 4).

GB 341 649 A discloses a metal casting process whereby permanent molds and thus molds comprising at least two casting mold elements are placed on a conveyor belt and are passed through an inductive heating element in form of an induction coil. Particulate material is placed on a dead-head above the mold and the material contained therein is melted by the inductive heating system and thus flows into the mold. Furthermore, said document discloses an apparatus that comprises an induction heating means having an induction coil and a transporting means for transporting and stacking casting molds as well as dispensing means for the object material and controlling means for at least controlling the operation of the induction heating means and/or the transporting means.

WO 2008/085134 A1, CH 266 939 A and DE 868 494 C each disclose the production of metallic parts by a so-called cast-forging process. In particular, WO 2008/085134 A1 relates to magnetically permeable alloys, and articles formed by liquid forging of such alloys. More particularly, that document relates to a liquid forgeable magnetically permeable Al alloy having at least one alloying element selected from the group consisting of Fe, Ni, and Co. It also relates to a method of forming an article with the alloy, the method comprising the steps of (a) pouring the alloy in molten form into a die cavity and (b) pressurizing the molten alloy with a punch during solidification of the alloy.

Furthermore, said document discloses an apparatus that comprises an induction heating means having an induction coil and a transporting means for transporting and stacking casting molds as well as dispensing means for the object material and controlling means for at least controlling the operation of the induction heating means and/or the transporting means.

It is an object of this invention to provide an alternative casting method.

This object is accomplished according to the present invention by a method for manufacturing an element of a plurality of casting mold elements assemblable to a 3-dimensional object casting mold, comprising: superimposing a plurality of mold layers, wherein each mold layer is made as follows: a) depositing casting pattern material inside at least one casting pattern material filling area determined by a digital model of the casting pattern, b) depositing temporary filling jacket material for making a boundary for at least one mold material filling area around the at least one casting pattern material filling area, c) filling the at least one mold material filling area with a casting mold material, d) removing the temporary filling jackets, e) filling the voids left by the removed jackets with the casting mold material and f) finishing the upper surface of the layer; and removing the casing pattern material.

According to a further aspect, the present invention provides a casting method for manufacturing a 3-dimensional object, comprising: a) providing at least two casting mold elements, each having at least one cavity and said casting mold elements being assemblable to a 3-dimensional object casting mold, b) putting one of the at least two casting mold elements onto a carrier of an electric induction heating means having a heating zone, the carrier being height-adjustable relative to said heating zone, c) filling object material into the at least one cavity of the casting mold element, d) heating the object material by means of the induction heating means, until the object material melts, e) while continuing heating repeating steps c) and d), until the object material at least approximately completely fills the at least one cavity, f) putting the other or another of the at least two casting mold elements on top of the lower casting mold element, g) repeating steps c) to f), until the casting mold is complete, h) stopping heating and i) removing the casting mold material.

The term "stopping" shall encompass immediate and gradual terminating.

Furthermore, according to a further aspect, the present invention provides a system for casting a 3-dimensional object, comprising: an electric induction heating means having an electric induction coil and a carrier preferably at the centre of the induction coil, the carrier being height-adjustable relative to the induction coil, a transporting means for transporting casting mold elements assemblable to a 3-dimensional object casting mold and stacking them on said carrier, a dispensing means for dispensing object material into a cavity of the casting mold element, and a control means that is adapted for controlling the operation of the induction heating means and/or of the transporting means and/or of the dispensing means and/or of the height-adjustment of the carrier such that a method according to any one of claims 14 to 23 is carried out.

Preferably, in the method for manufacturing an element of a plurality of casting mould elements, at least one of the depositing steps a) and b) and filling steps c) and e) is carried out by one or more materials printers, in particular 3D-printer(s) and inkjet printer(s).

According to a special embodiment, the casting pattern material is chemically dissolvable and has a higher melting and evaporation point than the temporary filling jacket material and the temporary filling jackets are removed by evaporation when exposed to heat in the removing step d) and the casting pattern material is chemically removed in the removing step.

Conveniently the temporary filling jacket material is wax or foam.

In addition, in step c) the casting mold material may comprise fine grain powder, in particular ceramic powder or wherein the casting mold material is a liquid suspension containing fine grain powder, in particular ceramic powder, mixed with a liquid binder. In general, usually the casting mold is made out of ceramic.

Preferably in the depositing step b) boundaries are made for at least two mold material filling areas and in the filling step c) casting mold materials comprising powders with different grain sizes are used, so that the powder with finer grains is in the mold material area that is close to the casting pattern material filling area and the powder with the coarser grains is farther outside with regard to the casting pattern material filling area.

Advantageously, the powder or at least one powder contains magnetic particles and/or further comprising: in at least one of the layers (51, 68 or 72) arranging magnetic material or parts outside of the at least one casting pattern material filing area. This enables the handling/transport of the resulting structure by magnetic forces.

Conveniently, the finishing of the upper surface of the layer comprises grinding the same.

Further, the superimposing step may be carried out, until a geometric discontinuity of the casting pattern is present.

According to a further special embodiment, in the depositing step a) the casting pattern material is deposited on a base plate out of the mold material or in the depositing step a) the casting pattern material may be deposited on a base plate out of the casting pattern material, so that the base plate material is removed together with a casting pattern material when removing the casting pattern material.

With regard to the casting method for manufacturing a 3-dimensional object, preferably the at least two casting mold elements are provided by means of a method according to any one of claims 1 to 10.

In the filling step c) the casting mold element or a part thereof may be already in the heating zone of the induction heating means or may be moved into said heating zone relative to the induction heating means.

Further, after step d) the casting mold element or part thereof may be moved out of the heating zone relative to the induction heating means.

The method may further comprise depositing a layer of binder on the upper surface of the lower casting mold element before the putting step f).

According to a further special embodiment, the removing step e) is carried out mechanically.

Advantageously, step c) is carried out by means of a materials printer, in particular 3D-printer or inkjet printer.

According to a special embodiment, the casting mold elements are magnetic and the putting step b) is carried out by a transporting means with a magnet, preferably an electromagnet.

The object material in step c) may comprise metal powder preferably mixed with plasticizer, preferably the filling step c) being carried out by a metal powder hopper or wherein the object material in step c) may comprise a metal paste.

Of course, the object could be made out of plastic etc. as well.

Preferably the transporting means of the system comprises at least one suction gripper and/or one magnet gripper.

Further, the dispensing means may comprise one or more materials printer(s), in particular 3D-printer(s) and inkjet printer(s).

According to another special embodiment of the system, it further comprises a unit for manufacturing the casting mold elements, said unit comprising a dispensing means for dispensing casting pattern material, a dispensing means for dispensing temporary filling jacket material, a dispensing means for dispensing casting mold material, a removing means for removing temporary filling jacket material, a finishing means for finishing an upper surface of the casting mold element, a removing means for removing a casting pattern material and a transporting means for transporting the semi-finished casting mold elements within the unit and the finished casting mold elements to the transporting means for transporting them to the carrier, wherein the control means is further adapted for controlling the operation of the unit for manufacturing the casting mold elements such that a method according to any one of claims 1 to 10 is carried out, in particular wherein at least one of said dispensing means of said unit is a material printer, in particular 3D-printer and inkjet printer, and/or the removing means for the temporary filling jacket material is a heater or an electric induction heating means and/or a finishing means is a grinding means and/or the removing means for removing the casting pattern material is a chemical means. Some or all of the removing means and finishing means may not belong to the unit, but considered as separate means of measures.

Finally, the transporting means for transporting the semi-finished and finished casting mold elements may comprise a conveyor means.

The invention is based on the surprising knowledge that by employing the principles of additive/layered manufacturing and applying them to the well-known investment casting method a new method results that is precise as the known investment casting method, but quicker and less expensive. By applying the concept of additive/layered manufacturing (additive layering), in which the geometry of the casting is conveniently divided into smaller sub-castings (casting mold elements), each has its metal feeding system and shrinkage allowance, so that geometric discontinuities can be also attended. Unlike most of the present casting methods which use one level of metal pouring sprues, runners, runner wells, gates and risers, the present invention - at least in a special embodiment - employs multi-levels of metal (or any casting material) pouring and gating system, which adds more versatility and flexibility for the casting geometries.

In the existing investment casting methods, high dimensional precision is achieved by using fine grain mold powder, usually ceramic powder, that is glued by a special heat resistant glue to the wax or foam pattern. Then the coated wax pattern is allowed to cure in a special oven. After that, another coating of glue is applied to the pattern and a larger grain ceramic powder is applied and so on. Finally, the wax pattern is melted and evaporated by heat, leaving a cavity that is going to be filled by the molten metal. In contrast, according to the present invention, so to say a multi-layered investment casting mold with multi-layered molten metal feeders, gates, raisers etc. is built. The present invention provides a casting method that is precise, but still quicker and less expensive than known investments casting methods.

In addition, in the existing metal casting methods hot molten metal is poured in the cavities of the mold. This may be done either manually (which may have safety, accuracy and efficiency concerns) or automatically (which may be expensive). In contrast, according to a special embodiment of the present invention, the metal is applied as a cold paste, which is heated to melting temperature and mixed in situ. This gives the advantage of improving the economics, safety, accuracy and versatility of the method.

Further features and advantages of the invention will become clear from the enclosed claims and the following description, in which a number of embodiments of the invention are illustrated in detail with reference to the schematic drawings, wherein
Figure 1 depicts a perspective view of a system for casting a 3-dimensional object in accordance with a special embodiment of the invention;
Figure 2 depicts a top view of a casting mold element during its manufacturing according to a method in accordance with a special embodiment of the invention;
Figures 3 to 10 depict cross-sectional views of a casting element at different stages during its manufacturing according to a method in accordance with a special embodiment of the invention;
Figure 11 depicts an example of a casting mold out of two parts;
Figures 12 and 13 depict cross-sectional views of another casting element at different stages during its manufacturing according to a method in accordance with the special embodiment of the invention;
Figure 14 depicts a perspective view of the individual electric induction heating means of the system of figure 1;
Figure 15 depicts an individual illustration of the heating means of figure 14 without induction coil;
Figure 16 depicts schematically the transporting means of the system of figure 1 when transporting a casting mold element;
Figures 17 to 21 depict schematically a different kind of transporting means of a system according to a special embodiment of the invention in use;
Figures 22A to 27B each depicts a perspective view (A) and cross-sectional view (B), respectively, of the heating means at different stages of a casting method in accordance with a special embodiment of the invention;
Figure 28 depicts an example of a 3-dimensional object to be cast;
Figure 29 depicts the object of figure 28 divided into three object elements;
Figure 30 depicts the cast object before removing the casting mold material; and
Figure 31 depicts a flow diagram of a casting method according to a special embodiment of the invention.

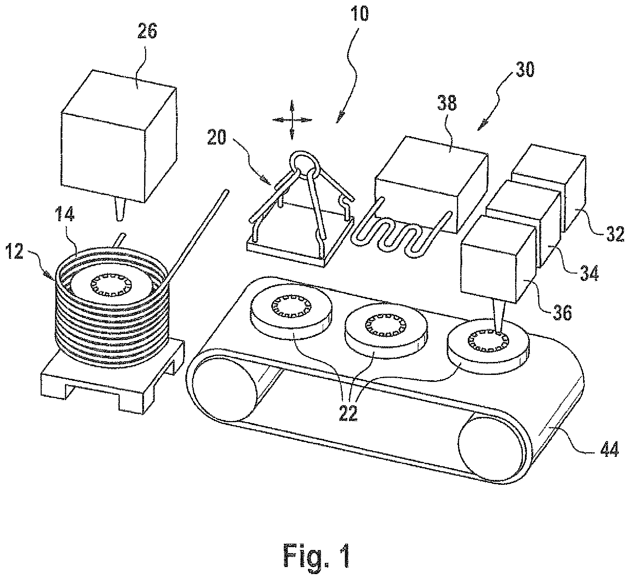

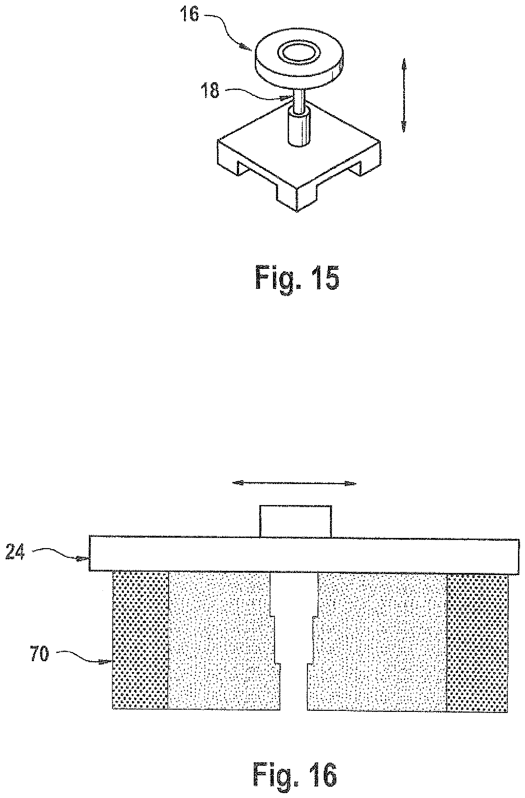

The system 10 for casting a 3-dimensional object shown in figure 1 comprises an electric induction heating means 12 having an electric induction coil 14 and a carrier 16 at the centre of the induction coil 14, wherein the carrier 16 is height-adjustable by way of a piston 18 (for example shown in figure 15). Further, said system 10 comprises a transporting means 20 for transporting casting mold elements like 22 that is shown in figure 1 at different stages of its manufacturing. Said casting mold element 22 in combination with at least one further casting mold element (not shown) is assemblable to a 3-dimensional object mold. Said transporting means 20 comprises an electromagnet 24 (shown in figure 16) that also serves to stack the casting mold elements on said carrier 16.

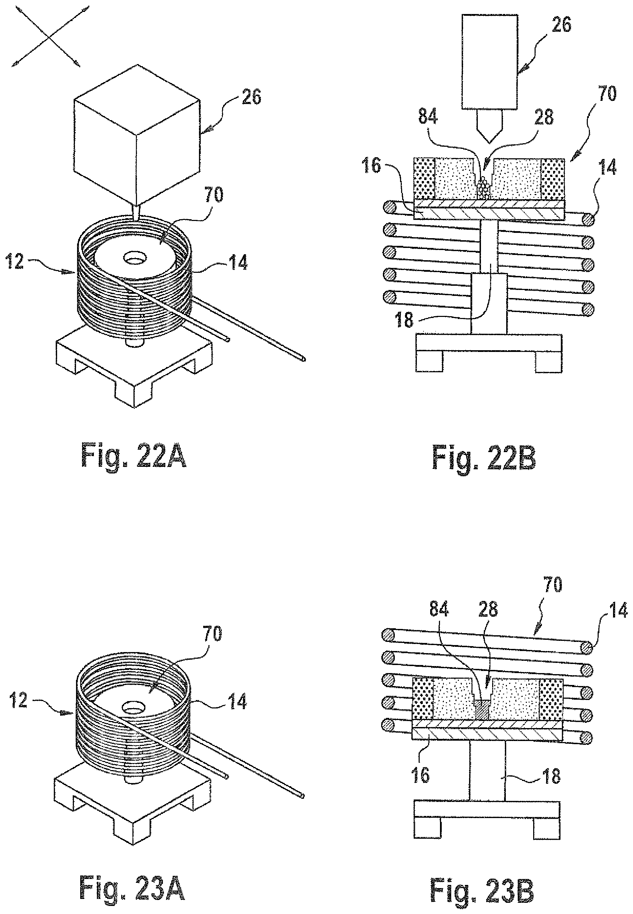

Above said electric induction heating means 12 there is a dispensing means 26 for dispensing object material into a cavity 28 (see e.g. figures 22A und 22B) of the casting mold element 22. Said dispensing means 26 also belongs to the system 10 and comprises an inkjet type computer controlled material dispenser.

In addition, said system 10 comprises a control means (not shown) adapted for controlling the operation of the induction heating means 12, the transporting means 20, the dispensing means 26 and the height-adjustment of the carrier 16 such that a method according to anyone of claims 14 to 23 can be performed.

The system 10 further comprises a unit 30 for manufacturing the casting mold elements, e.g. the casting mold element 22. Said unit 30 comprises a dispensing means 32 for dispensing casting pattern material, a dispensing means 34 for dispensing temporary filling jacket material, a dispensing means 36 for dispensing mold material, a removing means 38 for removing temporary filing jacket material, a finishing means for finishing an upper surface of the casting mold element, e.g. 22, a removing means for removing a casting pattern material and a transporting means 44 for transporting the semi-finished (or intermediate) casting mold elements within the unit 30 and the finished casting mold elements, e.g. 22, to the transporting means 20 for transporting them to the carrier 16. The control means (not shown) is also adapted for controlling the operation of said unit 30 for manufacturing the casting mold elements such that a method according to anyone of claims 1 to 13 can be performed.

All of said dispensing means 32 to 36 are inkjet type computer controlled material dispensers. The removing means 38 comprises a heater for evaporation of the casting pattern material.

The finishing means comprises a grinding means and the removing means comprises a chemical means for removing the casting pattern material.

The transporting means 44 comprises a conveyor for transporting or transferring the casting mold elements or "precursor" (intermediate products).

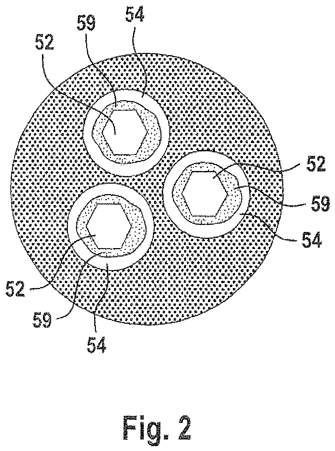

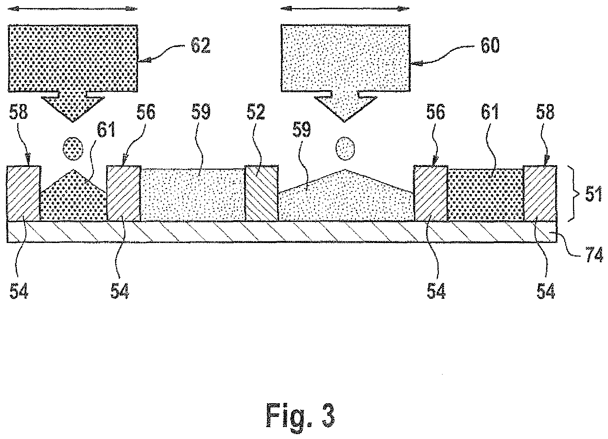

A method for manufacturing an element of a plurality of casting mold elements in accordance with a special embodiment of the invention will be now described with reference to figures 2 to 10 in particular figures 3 to 10.

On "Assembly level 1 (layer level)", a digital model of the casting pattern (all the casting pattern dimensions and specifications are stored in a 3D CAD-file) is divided into thin planar layers. The minimum layer thickness depends on the maximum allowable precision of the method (e.g. minimum powder grain size, minimum vertical step of the machine etc.). Each layer 51 contains a planar cross-section of the casting pattern. The casting pattern cross-section is made of a material that can be dispensed from a small nozzle and later dissolved chemically. The casting pattern material should also be stable under moderate temperatures up to the evaporation temperature of e.g. wax used in the other steps of the method. The section of the casting pattern can consist of a single zone or multiple zones.

Each layer further contains radially outside extending envelopes of the cross-section. To reduce the costs of the method, these envelopes are made out of gradually increasing grain size powder (casting mold material, which is usually ceramic). The fine grains are immediately surrounding the cross-section of the casting pattern, while the grain size gets larger when moving away from the cross-section of the casting pattern. However, if the casting dimensional tolerance at certain layers requires the highest dimensional precession, then only the fine grain powder may be used throughout the layer and no (further) envelopes will be present.

The grains of the powder of the casting mold material contain some ferrous (or similar material that can be attracted by magnets) particles that will be used in moving a stack of layers by the electromagnet of the transporting means 20 in subsequent levels. However, to protect the casting mold material from being contaminated with such metallic grains, some kind of ceramic coating may be introduced to prevent the ferrous particles from adhesion. Alternatively, ferrous inserts may be introduced at locations that do not interfere with the casting mold.

In case that the casting object itself is an assembly, any inserts (particularly those of material with higher melting point than the casting mold material) that should be added to the casting mold or casting mold element, then it can be added on this level of assembly. In this case, it would be inserted in the casting mold in its corresponding location and mold powder with binder will be poured around it and is treated the same way as the wax pattern.

In figure 3 casting pattern material 52 is already deposited inside a casting pattern material filling area that corresponds to the cross-section determined by a digital model of the casting pattern. In particular, the casting pattern material 52 was dispensed by the dispensing means 32 for dispensing casting pattern material.

Furthermore, by means of the dispensing means 34 for dispensing temporary filling jacket material 54, like wax, which has a low melting temperature and evaporation temperature, boundaries 56 and 58 are already made around the casting pattern material 52.

Figure 3 shows two dispensing means 60 and 62 for dispensing casting mold material. The system shown in figure 1 comprises only one dispensing means, namely 36, for dispensing casting mold material. Said dispensing means 36 might fulfil the functions of said two dispensing means 60 and 62.

Said dispensing means 60 and 62 may be inkjet dispensers. Dispensing means 60 is used for filling the area around the casting pattern material 52, restricted by the boundary 56, with casting mold material 59 that comprises a liquid suspension containing fine grain powder particles (e.g. ceramic) mixed with a liquid binder.

The dispensing means 62 is used for filling the mold material filling area between the boundaries 56 and 58 with casting mold material 61 that comprises a liquid suspension containing coarse grain powder particles (e.g. ceramic) mixed with the liquid binder. To this end, both dispensing means 60 and 62 are horizontally and vertically movable.

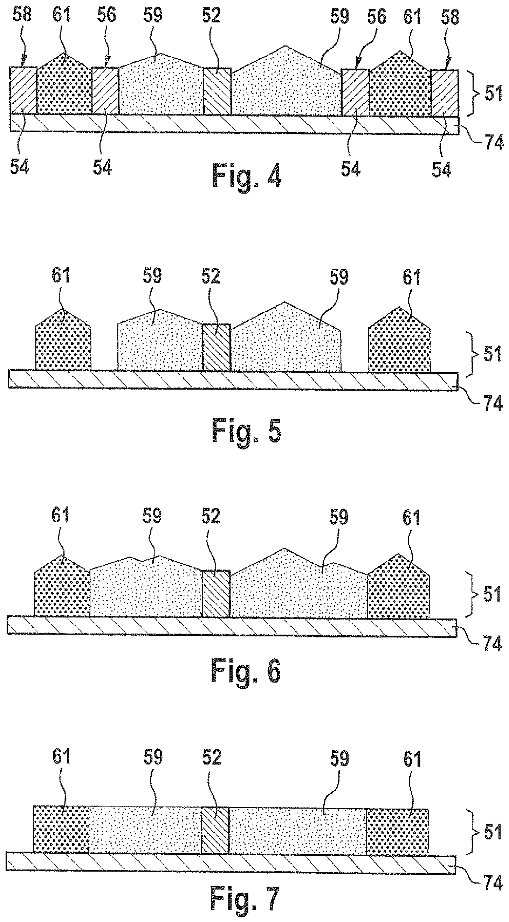

Figure 4 shows the resulting mold layer 51 before removing the temporary filling jackets and corresponding to the boundaries 56 and 58 (see figure 5) by application of heat by means of the removing means 38 for removing the temporary filling jacket material shown in figure 1.

As shown in figure 6, thereafter the dispensing means 60 for dispensing casting mold material is once again used for filling the voids left by the evaporated temporary filling jacket material 54 (except those of the edges).

As shown in figure 7, then the upper surface of the layer 51 is finished by finishing means (not shown). In particular, grinding discs (not shown) grind the layer 51 to size and remove the debris. The grinding should be gradual to avoid contaminating the different zones of the layer with debris coming from neighbouring zones.

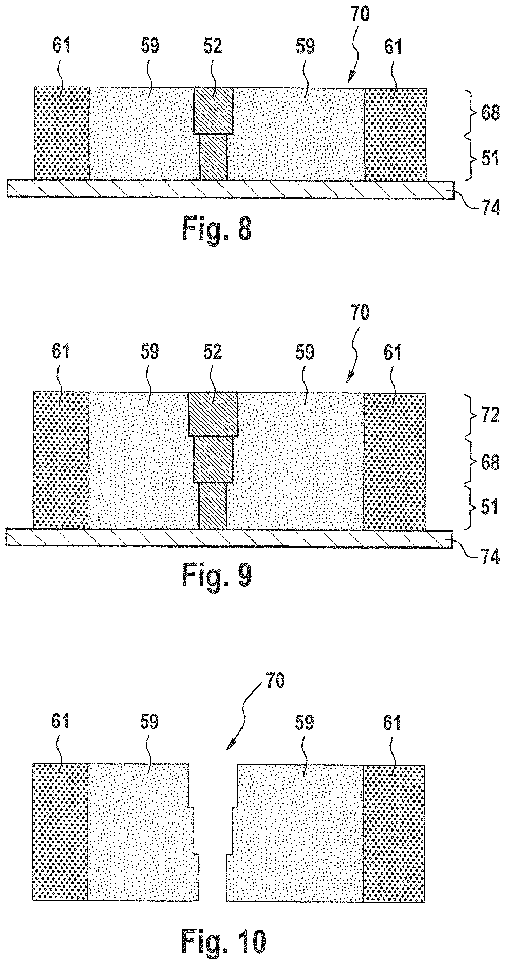

In figure 8 another layer 68 is already added. Said layer is made in the same way as the lower layer 51.

Figure 9 shows the whole casting mold element 70 as a stack of the layers 51 and 68 as well as a further layer 72. Please note that the layer 51 is deposited on a base plate 74 out of the casting pattern material. Said semi-finished casting mold element 70 is based on the following consideration: If the geometry of the casting object is continuous (in the sense that it can be filled by molten metal using a single metal feeding system), then the layers are allowed to be stacked one on top of the other, until a geometric discontinuity is present. When a geometric discontinuity is present, then the layers stacking stops and the group of layers are grouped together as one casting mold element (tray). For example, the geometry of the continuous casting mold may be different than the geometry of its molten metal feeding system. Accordingly, both are made in two different casting mold elements (trays) (i.e. two different layer stacks).

Figure 10 now shows the step of removing the casting pattern material 52. Said casting pattern material 52 and the material of the base plate 74 are chemically removed. If the casting mold element 70 were the casting mold bottom, then the material of the base plate 74 were made from the same material as the casting mold and not removed.

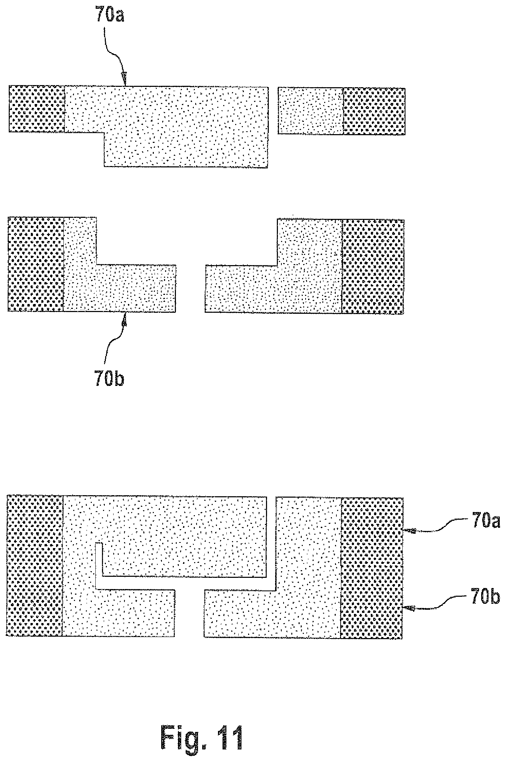

Figure 11 shows and example of a casting mold that is made from two parts, namely an upper part 70a and a lower part 70b before (above) and after (below) assembly.

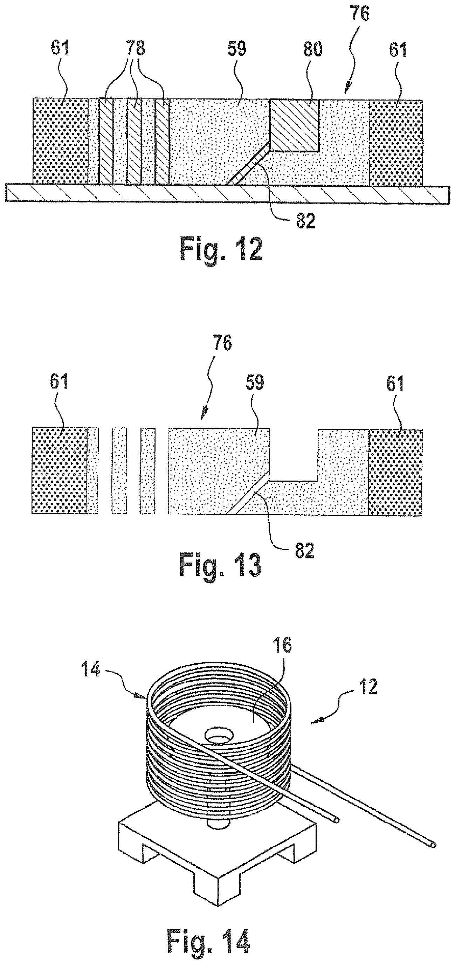

Figure 12 shows another casting mold element 76, namely a molten material feeding system with micro-gates, risers, sprues, runners and runnerwells. Only the casting pattern material 78, a riser 80 and a sprue/runner 82 are shown. Said molten metal feeding system is built layer by layer in the same way as the casting mold element 70 was built. The final casting mold element 76 is shown in figure 13.

Figure 14 shows details of the electric induction heating means 12 of figure 1. Said electric induction heating means 12 comprises an electric induction coil 14 and a carrier 16 that could be also named as a stage. Said carrier 16 is fixed at the upper end of the piston 18 that is movable up and down at its centre (see figure 15).

Figure 16 schematically shows the horizontal and vertical transporting of the casting mold elements 70. By way of the transporting means 20 that comprises the electromagnet 24 the casting mold element 70 is transported to the electric inducting heating means 12 of figure 14.

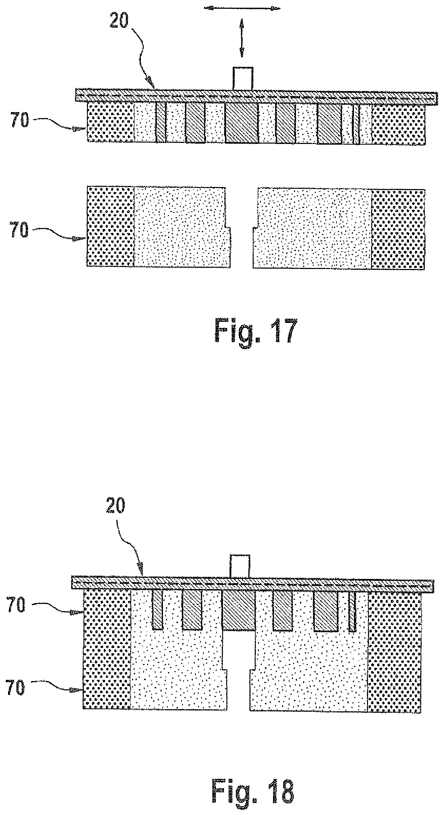

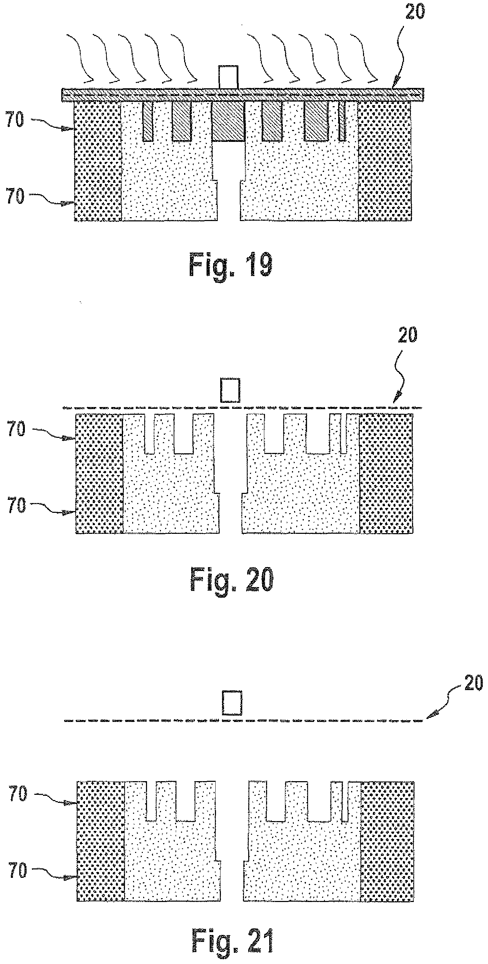

Figures 17 to 21 depict schematically a different kind of transporting means 20 of a system according to a special embodiment of the invention in use. The transporting means 20 and the casting mold element 70 are bound by wax. In this way the casting mold element 70 can be transported by the transporting means 20 to another casting mold element 70 (refer to figures 17 and 18). In figure 19 heat is applied to evaporate the wax and to free the transporting means 20 (see also figure 20). Then the transporting means 20 moves away (see figure 21). The casting mold elements 70 are stacked on top of each other.

As shown in figure 22A and 22B the casting mold element 70 is deposited on the carrier 16. With the piston 18 of the electric inducting heating means (furnace) 26 in the raised up position to clear the heating zone of said electric inducting heating means 12 and by using the dispensing means 26 object material 84, for example powder mixed with plasticizer, is poured in the cavity 28.

As shown in figures 23A and 23B, thereafter the carrier 16 with the casting mold element 70 is lowered for heating, until the plasticizer evaporates and the metal melts.

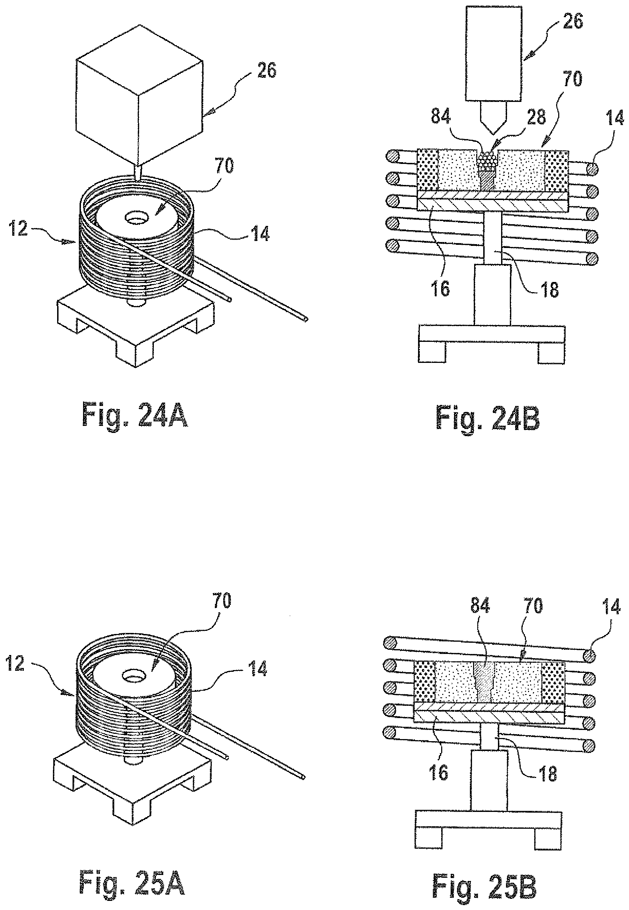

Then the carrier 16 is raised and additional object material 84 is poured into the cavity 28 (see figures 24A and 24B).

These steps are repeated, until the molten object material 84 completely fills the cavity 28 (see figures 25A and 25B).

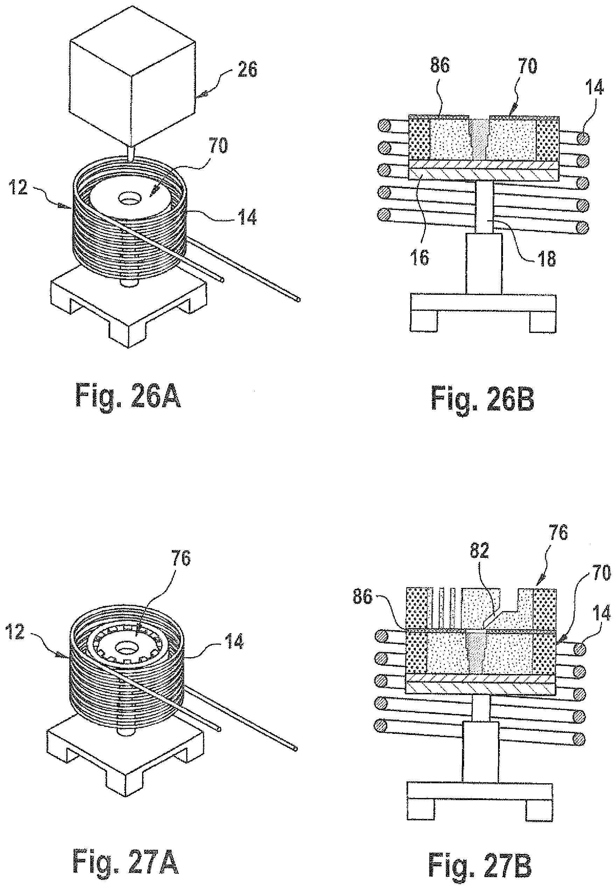

Thereafter the carrier 16 is raised and for example by using an inkjet head some thin layer of binder 86 (fine casting mold material powder can be added) is poured on the top surface of the first casting mold element 70 (see figures 26A and 26B) to bind the next casting mold element 76 (see figures 27A and 27B).

Thereafter the casting mold element 76 is placed at the top of the casting mold element 70 by means of the transporting means 20 and then lowered in the electric inducting heating means 12 to keep it hot (see figures 27A and 27B).

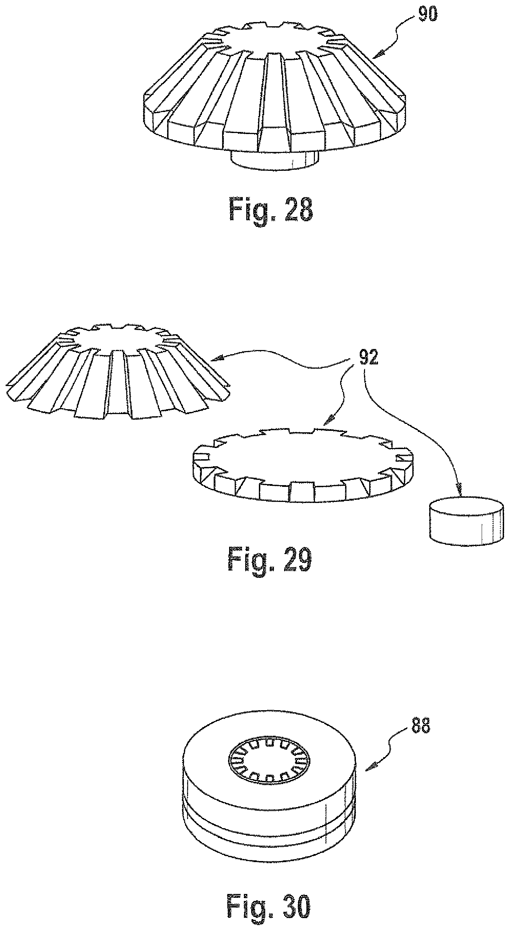

The steps are repeated, until all the casting mold elements are placed inside the electric induction heating means 12 and the casting mold 88 is complete (see figure 30).

Thereafter the induction heating is stopped and the object material 84 is allowed to solidify and to cool to a suitable temperature. Finally, the casting mold material is removed by mechanical means to extract the finished object 90 (see figure 28). For a better understanding of the method, please also refer to figure 29. Said figure shows an example of an object 3D model 92 divided into sub-parts. For each of said sub-parts a casting mold element will be manufactured. Said casting mold elements are assemblable to a 3-dimensional object casting mold that can be used for casting the object.

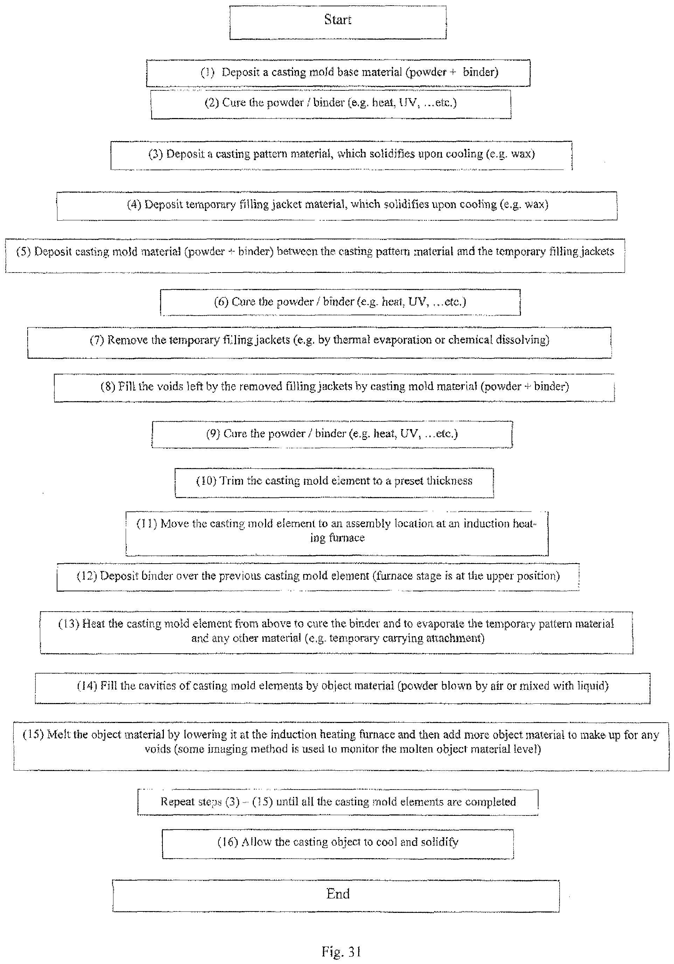

Figure 31 depicts a flow diagram of a casting method according to a special embodiment of the invention. Said casting method could be considered in principle as a casting method for manufacturing a 3-dimensional object as described above comprising a method for manufacturing an element of a plurality of casting mold elements as described above.

In block 1 a casting mold base material (powder + binder) is deposited. Thereafter, the powder/binder is cured for example by heat, UV etc. (2). Then a casting pattern material is deposited, which solidifies upon cooling (e.g. wax) (3). In block 4, temporary filling jacket material is deposited, which solidifies upon cooling (e.g. wax). Further, in block 5, casting mold material (powder + binder) is deposited between the casting pattern material and the temporary filling jackets. Thereafter, the powder/binder is cured for example by heat, UV etc. (6). Then the temporary filling jackets are removed for example by thermal evaporation or chemical dissolving (7). In block 8 the voids left by the removed filling jackets are filled by casting mold material (powder + binder). Then the powder/binder is cured for exampled by heat, UV etc. (9). Thereafter, the casting mold element is trimmed to a preset thickness (10). In block 11 the casting mold element is moved to an assembly location at an induction heating furnace. Thereafter, binder is deposited over the previous casting mold element (furnace stage is at the upper position) (12). Then in block 13 the casting mold element is heated from above to cure the binder and to evaporate the temporary pattern material and any other material (e.g. temporary carrying attachment). In block 14, the cavities of the casting mold elements are filled by object material (powder blown by air or mixed with liquid). The object material is melted then by lowering it at the induction heating furnace and then more object material is added to make up for any voids (some kind of imaging method is used to monitor the molten object material level) (15). Thereafter, the steps in blocks 3 to 15 are repeated, until all the casting mold elements are completed. In block 16 the casting object is allowed to cool and solidify.

Even though a metal powder hopper can be used to fill the casting mold material, adding the material (metal) in the form of paste can have a better precision, because the sputtering is greatly reduced. The plasticizer can be any liquid material that matches with the type and grain size of the (metal) powder used and then is evaporated by heat.

When there are inner cores that must be removed after casting, these cores are filled in specially made cavities (are filled with wax first, and treated similar to the casting mold cavity, but then filled with special casting mold core material that is then chemically dissolved out the casting after the part is cooled).

The casting pattern material and temporary filling jackets material can be interchanged. For example, the casting pattern material can be made out of wax that is evaporated by heat, and the temporary filling jackets can be made from material that can be dissolved chemically.

The method at least in accordance with a special embodiment of the invention employs a very versatile and dimensionally priced method (the investment casting method) in a new way to improve the cost and time of this method. Since at present the conventional investment casting method has many steps that are preformed manually and sequentially, automation and parallelization of the method can save time and cost in addition to improving accuracy. Also, the present investment casting methods cannot deal effectively with sharp geometric discontinuities in the casting, where the molten metal can solidify before reaching some mold cavities. The new method takes advantage of the additive layering process, as the molten metal is added in layers, with each layer having its feeders, gates and raisers. In particular, when dealing with castings that have sharp geometric discontinuities (e.g. highly dispersed geometry or large number of fine members that are connected together or connected to large members), then the additive layered manufacturing can provide a needed flexibility.

At least special embodiments of the invention are characterized as follows:
- performing investment casting additively,
- dividing the geometry of the casted part into layers, each has its molten metal feeding system,
- the utilization of induction heating to keep the molten metal in melting temperature while adding more metal powder,
- the utilization of inkjet technology.

The casting method and the system can be also described as method and system for additive casting.

### Reference number list

- 10: system
- 12: electric induction heating means
- 14: electric induction coil
- 16: carrier
- 18: piston
- 20: transporting means
- 22: casting mold element
- 24: electromagnet
- 26: dispensing means
- 28: cavity
- 30: unit
- 32: dispensing means for dispensing casting pattern material
- 34: dispensing means for dispensing temporary filling jacket material
- 36: dispensing means for dispensing casting mold material
- 38: removing means for removing temporary filling jacket material
- 44: transporting means for transporting the semi-finished casting mold elements
- 51: layer
- 52: casting pattern material
- 54: temporary filling jacket material
- 56, 58: boundaries
- 59, 61: casting mold material
- 60, 62: dispensing means for dispensing casting mold material
- 68: layer
- 70: casting mold element
- 70a: upper part
- 70b: lower part
- 72: layer
- 74: base plate
- 76: casting mold element
- 78: casting pattern material
- 80: raiser
- 82: sprue/runner
- 84: object material
- 86: binder
- 88: casting mold
- 90: object
- 92: model

## Claims

1. Casting method for manufacturing a 3-dimensional object, comprising:
a) providing at least two casting mold elements (22, 70, 76), each having at least one cavity (28) and said casting mold elements being assemblable to a 3-dimensional object casting mold (88),
b) putting one (70) of the at least two casting mold elements onto a carrier (16) of an electric induction heating means (12) having a heating zone, the carrier being height-adjustable relative to said heating zone,
c) filling object material (84) into the at least one cavity (28) of the casting mold element (22, 70),
d) heating the object material by means of the induction heating means (12), until the object material (84) melts,
e) while continuing heating repeating steps c) and d), until the object material (84) at least approximately completely fills the at least one cavity (28),
f) putting the other (76) or another of the at least two casting mold elements on top of the lower casting mold element (70),
g) repeating steps c) to f), until the casting mold (88) is complete,
h) stopping heating and
i) removing the casting mold material (59, 61).

2. Method according to claim 1, wherein in the filling step c) the casting mold element (70) or a part thereof is already in the heating zone of the induction heating means (12) or is moved into said heating zone relative to the induction heating means (12).

3. Method according to claim 1 or 2, wherein after step d) the casting mold element (70) or part thereof is moved out of the heating zone relative to the induction heating means (12).

4. Method according to any one of claims 1 to 3, further comprising: depositing a layer of binder (86) on the upper surface of the lower casting mold element (70) before the putting step f).

5. Method according to any one of claims 1 to 4, wherein the removing step i) is carried out mechanically.

6. Method according to any one of claims 1 to 5, wherein step c) is carried out by means of a materials printer, in particular 3D-printer or inkjet printer.

7. Method according to any one of claims 1 to 6, wherein the casting mold elements (22, 70, 76) are magnetic and the putting step b) is carried out by a transporting means (20) with a magnet, preferably an electromagnet (24).

8. Method according to any one of claims 1 to 7, wherein the object material (84) in step c) comprises metal powder preferably mixed with plasticizer, preferably the filling step c) being carried out by a metal powder hopper or wherein the object material in step c) comprises a metal paste.

9. System (10) for casting a 3-dimensional object, comprising:
an electric induction heating means (12) having an electric induction coil (14) and a carrier (16) preferably at the centre of the induction coil, the carrier being height-adjustable relative to the induction coil,
a transporting means (20) for transporting casting mold elements (22, 70, 76) assemblable to a 3-dimensional object casting mold (88) and stacking them on said carrier (16),
a dispensing means (26) for dispensing object material (84) into a cavity (28) of the casting mold element (22, 70, 76), wherein the dispensing means (26) comprises one or more materials printer(s), in particular 3D-printer(s) and inkjet printer(s), and
a control means that is adapted for controlling the operation of the induction heating means (12) and/or of the transporting means (20) and/or of the dispensing means (26) and/or of the height-adjustment of the carrier (16) such that a method according to any one of claims 11 to 19 is carried out.

10. System (10) according to claim 9, wherein the transporting means (20) comprises at least one suction gripper and/or one magnetic gripper.

11. System (10) according to claim9 or 10, further comprising:
a unit (30) for manufacturing the casting mold elements (22 70, 76), said unit comprising a dispensing means (32) for dispensing casting pattern material (52, 78),
a dispensing means (34) for dispensing temporary filling jacket material (54),
at least one dispensing means (36) for dispensing casting mold material (59, 61),
a removing means (38) for removing temporary filling jacket material (54),
a finishing means for finishing an upper surface of the casting mold element (22, 70, 76),
a removing means for removing a casting pattern material (52, 78) and
a transporting means (44) for transporting the semi-finished casting mold elements (22, 70, 76) within the unit and the finished casting mold elements to the transporting means (20) for transporting them to the carrier (16),
wherein the control means is further adapted for controlling the operation of the unit (30) for manufacturing the casting mold elements (22, 70, 76) such that a method according to any one of claims 1 to 10 is carried out, in particular wherein at least one (32, 34, or 36) of said dispensing means of said unit (30) is a material printer, in particular 3D-printer and inkjet printer, and/or wherein the removing means (38) for the temporary filling jacking material is a heater or an electric induction heating means and/or the finishing means is a grinding means and/or the removing means for removing the casting pattern material is a chemical means.

12. System (10) according to claim 11, wherein the transporting means for transporting the semi-finished and finished casting mold elements (22, 70, 76) comprises a conveyor means.

## Patentansprüche

1. Gussverfahren zum Herstellen eines 3-dimensionalen Objekts, das Folgendes umfasst:
a) Bereitstellen von wenigstens zwei Gussformelementen (22, 70, 76), die jeweils wenigstens einen Hohlraum (28) aufweisen, und wobei die Gussformelemente zu einer 3-dimensionalen Objektgussform (88) zusammensetzbar sind,
b) Setzen eines (70) der wenigstens zwei Gussformelemente auf einen Träger (16) eines elektrischen Induktionserwärmungsmittels (12) mit einer Erwärmungszone, wobei der Träger relativ zu der Erwärmungszone höhenverstellbar ist,
c) Einfüllen eines Objektmaterials (84) in den wenigstens einen Hohlraum (28) des Gussformelements (22, 70),
d) Erwärmen des Objektmaterials mittels des Induktionserwärmungsmittels (12), bis das Objektmaterial (84) schmilzt,
e) Wiederholen der Schritte c) und d), während das Erwärmen fortgesetzt wird, bis das Objektmaterial (84) den wenigstens einen Hohlraum (28) wenigstens näherungsweise vollständig füllt,
f) Setzen des anderen (76) oder eines anderen der wenigstens zwei Gussformelemente auf das untere Gussformelement (70),
g) Wiederholen der Schritte c) bis f), bis die Gussform (88) vollständig ist,
h) Anhalten des Erwärmens und
i) Entfernen des Gussformmaterials (59, 61).

2. Verfahren nach Anspruch 1, wobei in dem Einfüllschritt c) sich das Gussformelement (70) oder ein Teil von diesem bereits in der Erwärmungszone des Induktionserwärmungsmittels (12) befindet oder relativ zu dem Induktionserwärmungsmittel (12) in die Erwärmungszone hineinbewegt wird.

3. Verfahren nach Anspruch 1 oder 2, wobei nach dem Schritt d) das Gussformelement (70) oder ein Teil von diesem relativ zu dem Induktionserwärmungsmittel (12) aus der Erwärmungszone herausbewegt wird.

4. Verfahren nach einem der Ansprüche 1 bis 3, das ferner Folgendes umfasst: Auftragen einer Schicht eines Bindemittels (86) auf die obere Oberfläche des unteren Gussformelements (70) vor dem Setzschritt f).

5. Verfahren nach einem der Ansprüche 1 bis 4, wobei der Entfernungsschritt i) mechanisch ausgeführt wird.

6. Verfahren nach einem der Ansprüche 1 bis 5, wobei der Schritt c) mittels eines Materialdruckers, insbesondere eines 3D-Druckers oder eines Tintenstrahldruckers, ausgeführt wird.

7. Verfahren nach einem der Ansprüche 1 bis 6, wobei die Gussformelemente (22, 70, 76) magnetisch sind und der Setzschritt b) durch ein Transportmittel (20) mit einem Magneten, bevorzugt einem Elektromagneten (24), ausgeführt wird.

8. Verfahren nach einem der Ansprüche 1 bis 7, wobei das Objektmaterial (84) in Schritt c) ein Metallpulver, bevorzugt gemischt mit einem Weichmacher, beinhaltet, wobei der Einfüllschritt c) bevorzugt durch einen Metallpulverfülltrichter durchgeführt wird, oder wobei das Objektmaterial in Schritt c) eine Metallpaste umfasst.

9. System (10) zum Gießen eines 3-dimensionalen Objekts, das Folgendes umfasst:
ein elektrisches Induktionserwärmungsmittel (12) mit einer elektrischen Induktionsspule (14) und einem Träger (16), der sich bevorzugt bei dem Zentrum der Induktionsspule befindet, wobei der Träger relativ zu der Induktionsspule höhenverstellbar ist,
ein Transportmittel (20) zum Transportieren der Gussformelemente (22, 70, 76), die zu einer 3-dimensionalen Objektgussform (88) zusammensetzbar sind, und Stapeln von diesen auf dem Träger (16),
ein Ausgabemittel (26) zum Ausgeben eines Objektmaterials (84) in einen Hohlraum (28) des Gussformelements (22, 70, 76), wobei das Ausgabemittel (26) einen oder mehrere Materialdrucker, insbesondere (einen) 3D-Drucker und (einen) Tintenstrahldrucker, umfasst, und
ein Steuermittel, das zum Steuern des Betriebs des Induktionserwärmungsmittels (12) und/oder des Transportmittels (20) und/oder des Ausgabemittels (26) und/oder der Höhenverstellung des Trägers (16), so dass ein Verfahren nach einem der Ansprüche 11 bis 19 ausgeführt wird, eingerichtet ist.

10. System (10) nach Anspruch 9, wobei das Transportmittel (20) wenigstens einen Sauggreifer und/oder einen Magnetgreifer umfasst.

11. System (10) nach Anspruch 9 oder 10, das ferner Folgendes umfasst:
eine Einheit (30) zum Herstellen der Gussformelemente (20, 70, 76), wobei die Einheit Folgendes umfasst:
ein Ausgabemittel (32) zum Ausgeben eines Gussmodellmaterials (52, 78),
ein Ausgabemittel (34) zum Ausgeben eines vorübergehenden Füllungsummantelungsmaterials (54), wenigstens ein Ausgabemittel (36) zum Ausgeben eines Gussformmaterials (59, 61),
ein Entfernungsmittel (38) zum Entfernen des vorübergehenden Füllungsummantelungsmaterials (54),
ein Feinbearbeitungsmittel zum Feinbearbeiten einer oberen Oberfläche des Gussformelements (22, 70, 76),
ein Entfernungsmittel zum Entfernen eines Gussmodellmaterials (52,78) und
ein Transportmittel (44) zum Transportieren der halbfertigen Gussformelemente (22, 70, 76) innerhalb der Einheit und der fertigen Gussformelemente zu dem Transportmittel (20), um sie zu dem Träger (16) zu transportieren,
wobei das Steuermittel ferner zum Steuern des Betriebs der Einheit (30) zum Herstellen der Gussformelemente (22, 70, 76), so dass ein Verfahren nach einem der Ansprüche 1 bis 10 ausgeführt wird, eingerichtet ist,
wobei insbesondere wenigstens eines (32, 34 oder 36) der Ausgabemittel der Einheit (30) ein Materialdrucker, insbesondere ein 3D-Drucker und ein Tintenstrahldrucker, ist und/oder wobei das Entfernungsmittel (38) für das vorübergehende Füllungsummantelungsmaterial ein Erwärmungselement oder ein elektrisches Induktionserwärmungsmittel ist und/oder wobei das Feinbearbeitungsmittel ein Schleifmittel ist und/oder wobei das Entfernungsmittel zum Entfernen des Gussmodellmaterials ein chemisches Mittel ist.

12. System (10) nach Anspruch 11, wobei das Transportmittel zum Transportieren der halbfertigen und der fertigen Gussformelemente (22, 70, 76) ein Förderbandmittel umfasst.

## Revendications

1. Procédé de coulage pour fabriquer un objet tridimensionnel, comprenant :
a) la fourniture d'au moins deux éléments de moule de coulage (22, 70, 76), chacun possédant au moins une cavité (28) et lesdits éléments de moule de coulage étant assemblables en un moule de coulage d'objet tridimensionnel (88),
b) le placement d'un (70) des au moins deux éléments de moule de coulage sur un support (16) d'un moyen de chauffage à induction électrique (12) possédant une zone chauffante, le support étant ajustable en hauteur par rapport à ladite zone chauffante,
c) le remplissage de matériau d'objet (84) dans l'au moins une cavité (28) de l'élément de moule de coulage (22, 70),
d) le chauffage du matériau d'objet, en utilisant le moyen de chauffage à induction (12), jusqu'à ce que le matériau d'objet (84) fonde,
e) tout en continuant le chauffage, la répétition des étapes c) et, d), jusqu'à ce que le matériau d'objet (84) au moins remplisse approximativement complètement l'au moins une cavité (28),
f) le placement de l'autre (76) ou d'un autre des au moins deux éléments de moule de coulage par-dessus l'élément de moule de coulage inférieur (70),
g) la répétition des étapes c) à f), jusqu'à ce que le moule de coulage (88) soit complet,
h) l'arrêt du chauffage, et
i) l'enlèvement du matériau de moule de coulage (59, 61).

2. Procédé selon la revendication 1, dans lequel, dans l'étape du remplissage c), l'élément de moule de coulage (70) ou une partie de celui-ci est déjà dans la zone chauffante du moyen de chauffage à induction (12) ou est déplacé dans ladite zone chauffante par rapport au moyen de chauffage à induction (12).

3. Procédé selon la revendication 1 ou 2, dans lequel, après l'étape d), l'élément de moule de coulage (70) ou une partie de celui-ci est déplacé hors de la zone chauffante par rapport au moyen de chauffage à induction (12).

4. Procédé selon l'une quelconque des revendications 1 à 3, comprenant en outre : le dépôt d'une couche de liant (86) sur la surface supérieure de l'élément de moule de coulage inférieur (70) avant l'étape du placement f).

5. Procédé selon l'une quelconque des revendications 1 à 4, dans lequel l'étape de l'enlèvement i) est réalisée mécaniquement.

6. Procédé selon l'une quelconque des revendications 1 à 5, dans lequel l'étape c) est réalisée au moyen d'une imprimante à matériaux, en particulier imprimante 3D ou imprimante à jet d'encre.

7. Procédé selon l'une quelconque des revendications 1 à 6, dans lequel les éléments de moule de coulage (22, 70, 76) sont magnétiques et l'étape du placement b) est réalisée par un moyen de transport (20) avec un aimant, de préférence un électroaimant (24).

8. Procédé selon l'une quelconque des revendications 1 à 7, dans lequel le matériau d'objet (84) dans l'étape c) comprend de la poudre de métal de préférence mélangée avec un plastifiant, de préférence l'étape du remplissage c) étant réalisée par une trémie à poudre de métal ou dans lequel le matériau d'objet dans l'étape c) comprend une pâte de métal.

9. Système (10) pour couler un objet tridimensionnel, comprenant :
un moyen de chauffage à induction électrique (12) possédant une bobine d'induction électrique (14) et un support (16) de préférence au centre de la bobine d'induction, le support étant ajustable en hauteur, par rapport à la bobine d'induction,
un moyen de transport (20) pour transporter des éléments de moule de coulage (22, 70, 76), assemblables en un moule de coulage d'objet tridimensionnel (88), et les empiler sur ledit support (16),
un moyen de distribution (26) pour distribuer un matériau d'objet (84) dans une cavité (28) de l'élément de moule de coulage (22, 70, 76), dans lequel le moyen de distribution (26) comprend une ou plusieurs imprimante(s) à matériaux, en particulier imprimante(s) 3D et imprimante(s) à jet d'encre, et
un moyen de commande qui est adapté pour commander le fonctionnement du moyen de chauffage à induction (12) et/ou du moyen de transport (20) et/ou du moyen de distribution (26) et/ou l'opération de l'ajustement en hauteur du support (16) de telle sorte qu'un procédé selon l'une quelconque des revendications 11 à 19 soit réalisé.

10. Système (10) selon la revendication 9, dans lequel le moyen de transport (20) comprend au moins un élément de prise à aspiration et/ou un élément de prise magnétique.

11. Système (10) selon la revendication 9 ou 10, comprenant en outre :
une unité (30) pour fabriquer les éléments de moule de coulage (22 70, 76), ladite unité comprenant
un moyen de distribution (32) pour distribuer un matériau de motif de coulage (52, 78),
un moyen de distribution (34) pour distribuer un matériau d'enveloppe de remplissage temporaire (54),
au moins un moyen de distribution (36) pour distribuer un matériau de moule de coulage (59, 61),
un moyen d'enlèvement (38) pour enlever le matériau d'enveloppe de remplissage temporaire (54),
un moyen de finition pour finir une surface supérieure de l'élément de moule de coulage (22, 70, 76),
un moyen d'enlèvement pour enlever un matériau de motif de coulage (52, 78) et
un moyen de transport (44) pour transporter les éléments de moule de coulage semi-finis (22, 70, 76) à l'intérieur de l'unité et les éléments de moule de coulage finis jusqu'au moyen de transport (20) pour les transporter jusqu'au support (16),
dans lequel le moyen de commande est en outre adapté pour commander le fonctionnement de l'unité (30) pour fabriquer les éléments de moule de coulage (22, 70, 76) de telle sorte qu'un procédé selon l'une quelconque des revendications 1 à 10 soit réalisé, en particulier dans lequel au moins l'un (32, 34, ou 36) desdits moyens de distribution de ladite unité (30) est une imprimante à matériau, en particulier une imprimante 3D et une imprimante à jet d'encre, et/ou dans lequel le moyen d'enlèvement (38) pour le matériau d'enveloppe de remplissage temporaire est un élément chauffant ou un moyen de chauffage à induction électrique et/ou le moyen de finition est un moyen de meulage et/ou le moyen d'enlèvement pour enlever le matériau de motif de coulage est un moyen chimique.

12. Système (10) selon la revendication 11, dans lequel le moyen de transport pour transporter les éléments de moule de coulage semi-finis et finis (22, 70, 76) comprend un moyen transporteur.
